(19) Europäisches Patentamt
European Patent Office
Office européen des brevets

(11) EP 0 576 130 B1

## (12) EUROPEAN PATENT SPECIFICATION

(45) Date of publication and mention
of the grant of the patent:
**29.10.1997 Bulletin 1997/44**

(51) Int. Cl.$^6$: **B60C 11/00**, B60C 11/18

(21) Application number: **93303622.0**

(22) Date of filing: **11.05.1993**

(54) **Pneumatic tires**

Luftreifen

Bandages pneumatiques

(84) Designated Contracting States:
**DE ES FR GB IT SE**

(30) Priority: **24.06.1992 JP 166195/92**
**25.06.1992 JP 167818/92**

(43) Date of publication of application:
**29.12.1993 Bulletin 1993/52**

(73) Proprietor: **BRIDGESTONE CORPORATION**
**Tokyo 104 (JP)**

(72) Inventor: **Makoto, Yamauchi**
**Kodaira City, Tokyo (JP)**

(74) Representative: **Whalley, Kevin et al**
**MARKS & CLERK,**
**57-60 Lincoln's Inn Fields**
**London WC2A 3LS (GB)**

(56) References cited:
**EP-A- 105 822       EP-A- 301 138**
**EP-A- 370 724       DE-A- 4 037 714**
**FR-A- 2 385 544**

- **DATABASE WPIL Week 9226, Derwent Publications Ltd., London, GB; AN 92-213781 & JP-A-4 143 104 (SUMITOMO RUBBER INDUSTRIES LTD.) 18 MAY 1992**
- **DATABASE WPIL Week 8647, Derwent Publications Ltd., London, GB; AN 86-309470 & JP-A-61 229 602 (OHTSU TIRE KK.) 13 October 1986**

## Description

The present invention relates to pneumatic tires, and more particularly the invention relates to so-called all-season tires. The invention is aimed at maintaining performance on ice roads (hereinafter referred to as "ice performance") at a sufficiently high level in a wearing middle stage or later, without fear of occurrence of shoulder-drop wearing or deterioration in cornering stability.

Conventional all-season tires are used not only on general roads and express highways but also on snowy roads and icy roads, and there are such conventional tires in which rigidity of blocks is made relatively smaller, as compared with ordinary summer tires, by the selection of the dimension of the blocks or the formation of sipes in each block, or such conventional tires in which a rubber composition having a compounding recipe having good snow and ice performances is used as a tread rubber. As such all-season tires, there are tires of a cap-and-base structure in which the tread rubber is divided into inner and outer layers as viewed in the radial direction of the tire, and a rubber composition capable of contributing to improvement in ice and snow performance is employed in the outer rubber layer, whereas a rubber composition having a low heat generation is employed in the inner rubber layer.

In the all-season tires of this type, a carcass, a belt layer and other reinforcing structure may be substantially the same as those in ordinary radial tires.

Since these all-season tires are designed to be able to run on all kinds of roads, the tires have various merits. However, since the history of the all-season tires themselves is short, there are a variety of problems left to be improved. Among them, reduction in ice performance in the wearing middle stage of the tread or later and occurrence of shoulder-drop wearing resulting from running on various roads have come to be the most serious problems.

The reason why deterioration in ice performance occurs in the wearing middle stage or later is considered as follows:

the depth of the main grooves defining the blocks becomes smaller due to the wearing, and rubber is deteriorated through transfer of oil, etc. in the tread rubber into other constituent members or scattering thereof to the outside with the lapse of time. Such phenomena both cause increase in rigidity of the blocks, so that flexibility of the blocks becomes lower to reduce gripping forces.

Attention is also drawn to the disclosure of EP-A-0370724.

It is an aim of the present invention to provide a pneumatic tire which can effectively improve ice performance in the wearing middle stage or later without sacrificing wear resistance and cornering stability, can prevent occurrence of shoulder-drop wearing, and can improve anti-vibration riding comfortability in the wearing middle stage or later.

The present invention provides a pneumatic tire comprising a tread, a pair of sidewalls, a pair of bead portions, a carcass composed of cords extending at an angle of substantially 90° with respect to the circumferential direction of the tread, and at least two belt layers arranged on the radially outer peripheral side of the crown portion of the carcass, the belt layers being composed of cords inclined with respect to the circumferential direction of the tread, and the cords of one of said at least two belt layers extending in an opposite direction to that of an adjacent belt layer, wherein a pair of two circumferential main grooves continuously extend in the circumferential direction of the tread on opposite sides of the equatorial plane of the tire, a portion of the tread located between the pair of circumferential main grooves in an axially central zone being constituted by an inner rubber layer located on a radially inner side and an outer rubber layer located on a radially outer side, the inner rubber layer being made of a foamed rubber having rubber characteristics different from those of the outer rubber layer, and the radially outer peripheral surface of the inner rubber layer being so located that the thickness of the inner rubber layer as measured radially outwardly from the bottom of the circumferential main groove is not more than 70 % of the depth of the circumferential main groove but not less than 2 mm, wherein the dynamic modulus of elasticity of the inner rubber is less than that of the outer rubber layer, and wherein the outer rubber layer is made of a rubber composition having a dynamic modulus of elasticity at -20°C being in a range of 15 x $10^7$ to 40 x $10^7$ dyn/cm$^2$.

It is preferable that the radially outer peripheral surface of the inner rubber layer is located near a position spaced radially outwardly from the bottoms of the circumferential main grooves by 1/2 of the depth of the circumferential main grooves. It is more preferable that the radially outer peripheral surface of the inner rubber layer is located at a position spaced from the bottoms of the circumferential main grooves in the radially outward direction by not less than 3 mm but not more than 2/3 of the depth of the circumferential main grooves.

According to a preferred embodiment of the pneumatic tire of the present invention, the tread portion in the central zone which is located between the pair of circumferential main grooves is constituted by at least three layers: an inner rubber layer located on the radially innermost side, an intermediate rubber layer located on the radially outer side of the inner rubber layer, and an outer rubber layer located on the radially outside of the intermediate layer. Rubber characteristics of any one of these three rubber layers are made different from those of the other rubber layers, and the foamed rate is increased from the outer layer to the inner rubber layer. The thickness of the inner rubber layer as measured from bottoms of the circumferential main grooves in a radially outward direction is not more than 70 % of the depth of the circumferential main grooves but not less than 2 mm, and the sum of the thickness of the inner rubber layer and that of the intermediate rubber layer is not more than 90 % of the depth of the circumferential main groove but not less than 4 mm.

According to the present invention, the outer rubber layer in the central zone of the tread is made of a rubber composition having a dynamic modulus of elasticity at -20°C being $15 \times 10^7$ to $40 \times 10^7$ $dyn/cm^2$.

Also according to the present invention, the dynamic modulus of elasticity of the inner rubber layer in the central zone of the tread is less than that of the outer rubber layer. Preferably, the foamed rate of the foamed rubber constituting the inner rubber layer is in a range of 5 to 50 %. Also, voids in the foamed rubber constituting the inner rubber layer are preferably substantially of closed cells.

In the preferred embodiment of the present invention, the dynamic modulus of elasticity of each of the inner rubber layer and the intermediate rubber layer is less than that of the outer rubber layer. Preferably, the foamed rate of the outer rubber layer is 0 to 10 %, that of the intermediate rubber layer is 3 to 40 %, and that of the inner rubber layer is 5 to 50 %. Also, voids in the foamed rubber constituting the inner rubber layer are preferably substantially of closed cells.

The outer rubber layer in the central area is preferably made of the same rubber composition as that of side rubber layers constituting portions of the tread located on axially side portions.

In the present invention, the side rubber layer is suitably made of a rubber composition for ordinary summer tires to improve wear resistance.

In the preferred embodiment of the present invention, a rubber composition for general all-season tires and a rubber composition for ordinary summer tires are suitably used in combination for the side rubber so as to improve wear resistance.

In the present invention, the JIS hardness is set with respect to the inner and outer rubber layers in the central zone of the tread and the side rubber layers in the axially side zones as follows:

Inner rubber layer < outer rubber layer $\leqq$ side rubber layer.

In the preferred embodiment of the present invention, the JIS hardness is set with respect to the rubber layers in the central zone of the tread as follows:

Inner rubber layer $\leqq$ intermediate rubber layer $\leqq$ outer rubber layer

The JIS hardness is more preferably 45 to 75 degrees for the inner rubber layer, 55 to 70 degrees for the intermediate rubber layer, and 55 to 70 degrees for the outer rubber layer.

In the present invention, the outer rubber layer and the side rubber layer are preferably made of a non-foamy rubber.

An auxiliary rubber layer may be additionally provided to cover an outer surface of each of the side rubber layers as viewed in the width direction of the tread, and the rubber characteristics of the auxiliary rubber layer are made the same as those of the sidewall rubber.

In the present invention, an amount of oil compounded into the inner rubber layer is preferably made less than that of oil compounded into the other rubber layers located around the inner rubber layer by not less than 10 parts by weight. In the preferred embodiment of the present invention, an amount of the oil compounded into each of the inner and intermediate rubber layers is preferably made less than that of oil compound into the other rubber layers located around the inner and intermediate rubber layers by not less than 10 parts by weight.

In the preferred embodiment of the present invention, the compounding composition and the foamed rate of the tread portion in the side zone of the tread are preferably made substantially the same as those of the rubber layers in the central zone of the tread.

(1) The function and effects of the present invention will be explained below.

a) The rubber layer in the central portion of the tread is divided into inner and outer layers as viewed in the radial direction, wherein the outer rubber layer is made of a rubber composition suited for ice performance and snow performance, whereas the inner rubber layer to be exposed at the treading surface of the tread in the wearing middle stage or later is made of foamed rubber having particularly good ice performance. Thereby, ice performance and snow performance can be both maintained at respectively high levels over a period from the wearing initial stage to the wearing middle stage or later.

That is, since the voids in the foamed rubber of the inner rubber layer are successively renewed through wearing in the wearing middle stage or later, ice performance can be maintained at a sufficiently high level.

b) When the side rubber layers in the side portions of the tread are suitably made of non-foamed rubber, occurrence of shoulder-drop wearing and deterioration in cornering performance can be effectively prevented.

c) In a new tire, since the depth of the main grooves is large, and further scattering of oil, etc. from the rubber layers is small, rigidity of the blocks is relatively small and flexibility of the blocks is high. Thus, the outer rubber layer is preferably made of a non-foamed rubber having excellent wear resistance.

d) When a foamed rubber suitably having wear resistance lower than that of the non-foamed rubber is used for the inner rubber layer, there is no danger that wear resistance largely deteriorates, because the depth of the main grooves becomes sufficiently small, and further rigidity of the blocks themselves and in turn wear resistance are largely increased through scattering of a considerable amount of the oil inside the blocks.

e) The reason why the radially outer peripheral surface of the inner rubber layer is located at such a level that the thickness of the inner rubber layer as measured from the bottoms of the circumferential main grooves in the radially outward direction is not more than 70 % of the depth of the circumferential main grooves but not less than 2 mm, and the radially outer peripheral surface of the inner rubber layer is preferably near 1/2 of the depth of the circumferential main grooves, as measured from the bottoms of the circumferential main grooves in the radially outer direction, is that while ice performance, etc. can be maintained by the outer rubber layer until the wearing middle stage, reduction in ice performance is prevented through exposure of the foamed rubber because particularly the ice performance tends to be deteriorated for the above-mentioned reasons in the wearing middle stage or later.

f) In this case, improved ice and snow performance can be exhibited in the wearing middle stage or later when the thickness of the inner rubber layer as measured radially outwardly from the bottoms of the circumferential main grooves is preferably set at not less than 3 mm but not more than 2/3 of the depth of the circumferential main grooves.

That is, if the above thickness of the inner rubber layer is less than 3 mm, ice and snow performances in the wearing middle stage or later may not be satisfactorily maintained, whereas if this thickness is more than 2/3 of the depth of the circumferential main grooves as measured radially outwardly from the bottoms of the circumferential main grooves, the above thickness of the inner rubber layer is so great that the wear resistance until the wearing middle stage is likely to lower.

g) When the dynamic modulus of elasticity at -20°C of the rubber composition constituting the outer rubber layer is set at a range of $15 \times 10^7$ to $40 \times 10^7$ dyn/cm$^2$, wear resistance and ice and snow performances can be realized at the same levels as those in conventional all-season tires.

h) When the dynamic modulus of elasticity of the inner rubber layer is made less than that of the outer rubber layer, good ice and snow performances can be more easily attained in the wearing middle stage or later. In this case, since in the wearing middle stage or later, the depth of the main grooves becomes smaller and rigidity of the blocks becomes greater, no problem occurs.

i) When the foamed rate of the foamed rubber constituting the inner rubber layer is preferably set in a range of 5 to 50 %, ice performance can be assured, and wear resistance can be maintained at a sufficiently high level.

That is, if the foamed rate of the foamed rubber constituting the inner rubber layer is less than 5 %, ice performance becomes poor, whereas if it is more than 50 %, rigidity of the blocks until the wearing middle stage or in the wearing middle stage or later becomes so small that wear resistance decreases.

j) When the voids in the foamed rubber are preferably of closed cells, edging effect appearing when the voids are broken by wearing is likely to increase. On the other hand, if the voids are of open cells, it is likely that when water invades the interior of the foamed rubber and is frozen there, rubber is likely to be fractured.

k) When the outer rubber layer and the side rubber layer are preferably made of the same rubber composition, it is possible to maintain ice performance in the central zone of the tread particularly in the wearing middle stage or later without at least sacrificing wear resistance of the shoulder.

l) Further, when the side rubber layer is made of a rubber composition suitable for summer tires, wear resistance of at least the shoulders and the side portions can be made at a level higher than that in the conventional tires.

m) When the JIS hardness is preferably increased in the order of the inner rubber layer < the outer rubber ≤ the side rubber layer, wear resistance of the shoulder or the opposite side zones can be improved, and shoulder-drop wearing can be reduced.

n) When an auxiliary rubber layer is preferably additionally provided to cover the outer surface of the side rubber layer as viewed in the width direction of the tread and the rubber characteristics of the auxiliary rubber layer are made the same as that of the sidewall rubber, occurrence of cracks in a joint interface between the tread and the sidewall can be effectively prevented.

o) When the amount of oil compounded into the inner rubber layer is preferably made less than that of oil compounded into the other rubber layers located around the inner rubber layer by not less than 10 parts by weight, since even when oil is scattered from the inner rubber layer particularly in the wearing middle stage or later so that the content of the oil in the inner rubber layer might become zero or small in the wearing middle stage or later, oil would transfer into the inner rubber layer having the oil content being zero or small through diffusion of the oil. Accordingly, degradation of the inner rubber layer can be prevented, and deterioration in ice performance can be more effectively prevented.

(2) Next, the functions and effects of the preferred embodiment of the present invention will be explained.

a) According to the preferred embodiment of the present invention, the rubber layer in the central portion of the tread is divided radially into at least three layers, and thus the rubber layers having higher foamed rates are exposed with the progress of the tread. Thereby, reduction in mainly ice performance can be effectively prevented particularly in the wearing middle stage or later.

Further, the thickness of the inner rubber layer as measured radially outwardly from the bottoms of the circumferential main grooves is set at not more than 70 % of the depth of the circumferential main grooves but not less than 2 mm, whereby reduction in ice performance and reduction in the rigidity of the blocks can be effectively prevented in the wearing middle stage or later.

If the thickness of the inner rubber layer as measured radially outwardly from the bottoms of the circumferential main grooves is set at more than 70 % of the depth of the circumferential main grooves, rigidity of the blocks becomes so small that wear resistance becomes poor. On the other hand, if said thickness is less than 2 mm, ice performance greatly lowers in the wearing middle stage or later.

c) The sum of the thickness of the inner rubber layer and that of the intermediate rubber layer is not more than 90 % of the depth of the circumferential main grooves but not less than 4 mm.

If the sum of the above thicknesses exceeds 90 % of the thickness of the intermediate rubber layer, rigidity of the blocks, etc. becomes so small that a problem is likely to occur upon wear resistance in the wearing middle stage or later, whereas if it is less than 4 mm, ice performance largely lowers in the wearing middle stage or later.

d) The outer rubber layer in the central area is preferably made of a non-foamed rubber composition having excellent ice performance and snow performance.

That is, when the tire is new, the depth of the main groove is great, and the amount of oil scattered from the rubber layers is small. Thus, rigidity of the blocks is relatively small, and flexibility of the blocks is high. Therefore, the outer rubber layer is preferably made of non-foamed rubber having greater wear resistance than the foamed rubber.

On the contrary, since the depth of the main grooves becomes sufficiently smaller in the wearing-progressed state in which the intermediate rubber layer and the inner rubber layer are exposed, rigidity of the blocks themselves, and in turn wear resistance of the tire increase. Thus, even when the intermediate rubber layer and the inner rubber layer are made of foamed rubber having low wearing resistance, there is no danger that wear resistance of the tire is largely lowered.

e) The side rubber layer in the side portion of the tread is preferably made of an ordinary non-foamed rubber composition so that occurrence of shoulder-drop wearing and reduction in cornering stability can effectively be prevented.

When the dynamic modulus of elasticity of -20°C of the rubber composition constituting the outer rubber layer is set in a range of $15 \times 10^7$ to $40 \times 10^7$ dyn/cm$^2$, excellent ice performance and snow performance can be assured without adversely affecting wear resistance in the wearing initial stage.

f) When the dynamic modulus of elasticity of each of the inner rubber layer and the intermediate rubber layer is made less than that of the outer rubber layer, sufficient flexibility can be assured and reduction in ice performance can be prevented, although otherwise degrading of the inner rubber layer tends to occur in the wearing middle stage.

g) When the foamed rate of the outer rubber layer is preferably in a range of 0-10 %, and the foamed rates of the foamed rubber constituting the intermediate rubber layer and the inner rubber layer are preferably in a range of 3-40 % and a range of 5-50 %, respectively, the progressing of wearing, in other words reduction in flexibility of the rubber owing to degradation of the rubber with lapse of time, can be complemented by the foamed rubber so that reduction in ice performance can be effectively prevented.

When the voids in each of the foamed rubbers are preferably of closed cells, the rubber layer can be effectively protected against frozen water inside the voids.

That is, if the voids are of open cells, water or the like enters a deep portion inside the tread rubber layer owing to a phenomenon similar to capillarity, and there is a high possibility that the rubber is fractured through freezing of this water.

h) The JIS hardness in the central area of the tread is preferably increased in the order of the inner rubber $\leqq$ the intermediate rubber layer $\leqq$ the outer rubber layer.

That is, as wearing progresses, rubber is degraded with lapse of time, and ice performance is deteriorated. As the location of the rubber layer becomes more inwardly, the hardness of the rubber decreases. Accordingly flexibility can be well assured, and excellent ice performance can be assured.

i) When an auxiliary rubber layer is preferably additionally provided to cover the outer surface of each of the side rubber layers as viewed in the width direction of the tread and the rubber characteristics of the auxiliary rubber layer are made the same as those of the sidewall rubber, the occurrence of cracks in a joint interface between the tread and the sidewall portion can be effectively prevented.

j) When the amount of oil compounded into each of the inner rubber layer and the intermediate rubber layer is made less than that of oil compounded into the other rubber layers around them by not less than 10 parts by weight, degradation of the rubber in the inner rubber layer can be prevented through transfer of the oil to the inner rubber layer from the rubber layers surrounding the inner rubber layer.

The invention will be further described with reference is made to the accompanying drawings, wherein:

Fig. 1 is a schematic sectional view of an embodiment of the present invention in a width direction of the tread;
Fig. 2 is a schematic sectional view of another embodiment of the present invention;
Fig. 3 is a schematic sectional view of a principal portion of still another embodiment of the present invention; and
Fig. 4 is a schematic sectional view of a preferred embodiment of the present invention in a width direction of the tread.

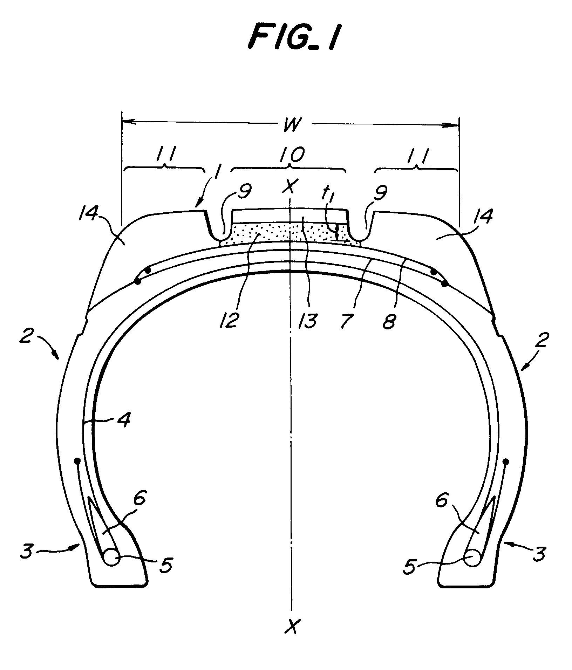

In the following, the same reference numerals are used in relation to the same or similar constituent parts throughout Figs. 1 through 4.

In Fig. 1 showing one embodiment of the present invention in a schematic sectional view in the width direction of the tread, a sidewall 2 continues to each of opposite ends of a tread 1, and a bead portion 3 continues to a radially inner end of each of the sidewalls 2.

This tire has a tire size of 175/65 R 14. A carcass 4 is constituted by one ply composed of organic fiber cords extending at an angle of substantially 90° with respect to the circumferential direction of the tire. Each of axially side portions of the carcass 4 is turned up and fixed around a bead core 5 from an axially inner side to an axially outer side of the tire.

A bead filler 6 having high JIS hardness of such as 70 to 90 degrees is arranged on an outer peripheral side of the bead core 5 such that the bead filer 6 contacts the bead core 5 between a main portion and a turn-up portion of the carcass 4. Two belt layers 7 and 8 are arranged on a radially outer peripheral side of a crown portion of the carcass 4 such that steel cords constituting the belt layers 7, 8 cross at 21° with respect to the circumferential direction of the tire and extend in opposite directions, respectively.

A pair of two circumferential main grooves 9 continuously extend in the circumferential direction of the tread on opposite sides of an equatorial plane X-X of the tire in the tread 1 which is provided on a radially outer side of the belt layers 7, 8. By these circumferential main grooves 9, the tread 1 is divided into a central zone 10 located between the main grooves 9 and side zones 11 located on widthwise opposite sides of the tread.

Each of the circumferential main grooves 9 may extend in a straight shape, a zigzag shape or other appropriate shape. Further, the widths of the central zone 10 and the side zone 11 may be set at, for example, about 50 % and about 25 %, respectively, with respect to the width W of the treading surface of the tread.

In this embodiment, the tread portion in the central zone 10 is constituted by two rubber layers: an inner rubber layer 12 located on a radially inner side of the tire and an outer rubber layer 13 located on a radially outer side of the tire. The inner rubber layer 12 is made of a foamed rubber having hardness and a compounding recipe shown in Table 1 below, and the outer rubber layer 13 is made of a non-foamed rubber having hardness and a compounding recipe shown in Table 2 below. This non-foamed rubber has excellent ice and snow performances.

Table 1: Foamed rubber composition (Foamed rate: 20 %, JIS hardness: 60 degrees)

Table 1

|  | Part by weight |
|---|---|
| NR | 70 |
| BR | 30 |
| C/B (N110) | 5 |
| Aromatic oil | 5 |
| Stearic acid | 2 |
| Antioxidant | 1 |
| Zinc oxide | 3.5 |
| Vulcanization accelerator | 1.5 |
| Sulfur | 1.2 |
| Foaming agent | 5.0 |

Table 2: Rubber composition for all season tires (JIS hardness: 63 degrees)

Table 2

|  | part by weight |
|---|---|
| NR | 20 |
| BR | 30 |
| SBR | 50 |
| Carbon (N339) | 80 |
| Aromatic oil | 30 |
| Stearic acid | 1 |
| ZnO | 3 |
| Antioxidant | 1 |
| Vulcanization accelerator DPG | 0.4 |
| Vulcanization accelerator DM | 0.4 |
| Vulcanization accelerator NOBS | 0.6 |
| Sulfur | 1.8 |

The inner rubber layer 12 has a thickness $t_1$ of 4.5 mm as measured radially outwardly from the bottom of the circumferential main groove 9 having a thickness of 8 mm.

The foamed rate of the foamed rubber constituting the inner rubber layer 12 is 20 % in Table 1, but it may be preferably varied within a range of 5 to 50 % upon necessity. Voids in the foamed rubber are preferably substantially of closed cells.

A side rubber layer 14 constituting the side zone 11 of the tread is made of a non-foamed rubber having hardness and a compounding recipe shown in Table 3 below. This non-foamed rubber is rubber to be used for summer tires.

Table 3: Ordinary summer tire composition having good wear resistance (JIS hardness: 67 degrees)

Table 3

|  | part by weight |
| --- | --- |
| SBR | 60 (82.5) |
| BR | 40 (55) |
| C/B (N234) | 75 |
| Stearic acid | 2 |
| ZnO | 3 |
| Vulcanization accelerator DPG | 0.4 |
| Vulcanization accelerator DM | 0.4 |
| Vulcanization accelerator NOBS | 0.6 |
| Sulfur | 1.75 |
| OIL MASTERBATCH | (37.5PHR) |

In this tire, an amount of oil compounded into the inner rubber layer 12 is preferably made less than that of oil compounded into constituent members of the tread surrounding the inner rubber layer. By so doing, reduction in flexibility owing to degradation of the rubber of the inner rubber layer 12 can be prevented.

More specifically, in the above tire, no oil is added into the foamed rubber of the inner rubber layer 12. In such a case, in addition to the above effect, influences due to change in the inner rubber layer 12 with lapse of time until the inner rubber layer is exposed in the wearing middle state can be minimized by the oil transferred into the inner rubber layer 12 from the surrounding rubber, thereby fully maintaining flexibility of the rubber.

From the standpoint of preventing reduction in ice performance in the wearing middle stage or later, the dynamic modulus of elasticity and the JIS hardness of the inner rubber layer 12 are made less than respective values of the outer rubber layer 13 and the side rubber layers 14. Particularly, it is preferable that the JIS hardness is set at 45-70 degrees for the inner rubber layer 12, 55-70 degrees for the outer rubber layer, and 55-70 degrees for the side rubber layer 14. As the case may be, it may be that the JIS hardness of the outer rubber layer 13 is made equal to that of the side rubber layer 14.

According to the thus constructed tire, ice performance can be fully effectively exhibited by the function of mainly the outer rubber layer 13 during a period from the wearing initial stage to the wearing middle stage, whereas ice performance in the wearing middle stage or later can be also fully effectively exhibited by the function of mainly the inner rubber layer made of the foamed rubber.

Further, occurrence of shoulder-drop wearing, reduction in cornering stability, etc. can be effectively prevented by appropriately selecting the rubber composition, etc. for the side rubber layer 14.

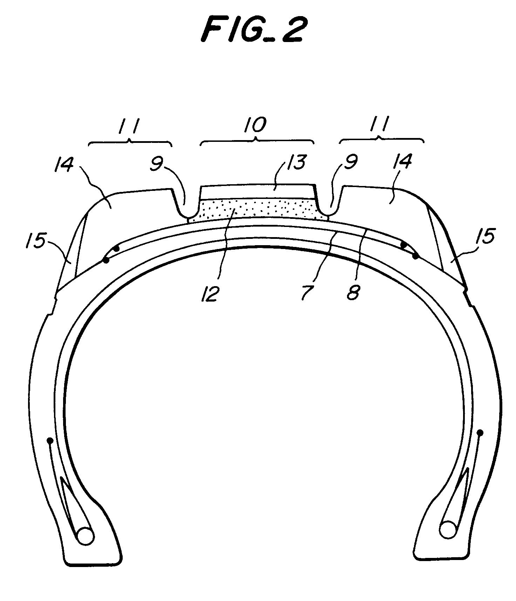

Fig. 2 is a sectional view similar to that of Fig. 1, showing another embodiment of the present invention. In the embodiment of Fig. 2, side rubber layers 14 are made of the same rubber as that of the outer rubber layer 13, and the outer surface of each of the side rubber layers 14, as viewed in the width direction of the tire, is covered with an additional auxiliary rubber layer 15 having a substantially triangular sectional shape.

The additional auxiliary rubber layer 15 is made of the same rubber composition as that constituting the sidewall 2, that is substantially the same rubber composition as that of the sidewall rubber, so that bonding forces between the side end portion of each of the side rubber layers 14 and the sidewall 2 are enhanced to prevent occurrence of cracks in a joining interface between the sidewall 2 and the tread 1.

From the standpoint of enhancing the productivity and joining strength of the auxiliary rubber layer to the side rubber layer 14, it is preferable that the additional auxiliary layers 15 are simultaneously extruded together with the inner and outer rubber layers 12, 13 and the side rubber layers 14 as the other constituent members of the tread.

In this pneumatic tire, not only can similar effects as in the previously described embodiment be attained, but also the same effect as that in conventional tires can be ensured against shoulder wearing and shoulder-drop wearing in the opposite side zones. Consequently, reduction in ice performance in the central zone of the tread can be prevented particularly in the wearing middle stage or later.

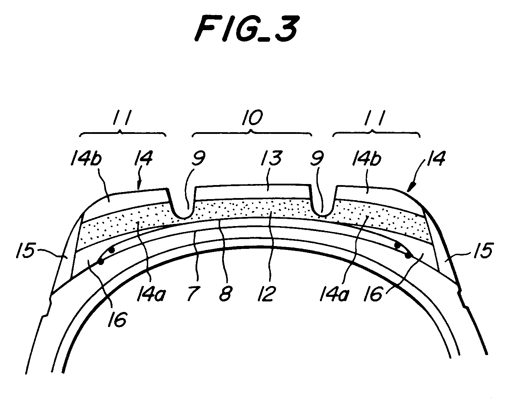

Fig. 3 is a sectional view of a principal portion of still another embodiment of the present invention. In this embodiment, a side rubber layer 14 is constituted by an inner layer 14a and an outer layer 14b located on radially inner and outer sides, respectively. The inner layer 14a is made of a foamed rubber having the same composition as that of an inner rubber layer 12, and the outer layer 14b is made of a non-foamed rubber having the same composition as that of an outer rubber layer 13 and excellent ice performance.

In this tire construction, fracture strength of the inner layer 14a made of the foamed rubber and joined to side end portions of belt layers 7, 8 is slightly less than that of the non-foamed rubber, which is undesirable from the standpoint of preventing peeling of the belt end. In the embodiment of Fig. 3, a protective non-foamed rubber layer 16 having low heat generation is interposed between the end portions of the belt layers 7 and 8 and the inner layer portion 14a.

According to the tire of this embodiment, wear resistance can be exhibited in the side zones at the same level as that of the conventional tire until the wearing middle stage. Further, since the inner layer 14a is exposed outside in the wearing middle stage or later, ice performance can be further improved.

Experiment 1:

Comparison tests were effected regarding ice performance in the wearing initial stage, wearing resistance in the wearing middle stage, and shoulder-drop wearing and cornering stability with respect to Invention tires, a Prior tire and a Comparison tire, as explained below.

Test tires:

The tire size of all the test tires was 175/65R14.

(1) Invention tire 1      A tire having a construction as shown in Fig. 1
(2) Invention tire 2      A tire having a construction as shown in Fig.2
(3) Invention tire 3      A tire having a construction as shown in Fig. 3
(4) Prior tire      A tire in which the entire tread rubber was a rubber composition for ordinary all season tires
(5) Comparison tire      A tire in which the entire tread rubber was a foamed rubber

Test methods:

Ice performance was evaluated by measuring $\mu$-values of the tire on ice. Ice performance in the wearing middle stage was evaluated in the state that the depth of a main groove was reduced to about a half of the original depth.

Shoulder-drop wearing was evaluated by measuring difference in a worn amount between a shoulder portion and a central zone of the tread after running on general roads over 10,000 km.

Cornering stability was evaluated by measuring cornering power of the tire on an indoor drum.

Test results:

Results on the above tests are shown in Table 4 below by index by taking those of the Prior tire as control. The greater the index value, the better are the results.

Table 4

|  | Prior art tire | Comparison tire | Invention | | |
|  |  |  | Invention tire 1 (Fig. 1) | Invention tire 2 (Fig. 2) | Invention tire 3 (Fig. 3) |
|---|---|---|---|---|---|
| Tread rubber | Rubber composition for all seasons | Tread entirely made of foamed rubber | :central zone<br>Outer rubber layer: rubber having good ice performance<br>Inner rubber layer: Foamed rubber<br>:opposite side zones<br>Single rubber composition for summer tires | :central zone<br>Outer rubber layer: rubber having good ice performance<br>Inner rubber layer: Foamed rubber<br>:opposite side zones<br>Single rubber composition for running on ice | :central zone and opposite side zones<br>Outer rubber layer: rubber having good ice performance<br>Inner rubber layer: Foamed rubber<br>Protective layer made of non-foamed rubber is provided at each end portion of belt. |
| Ice performance in wearing initial stage | 100 | 120 | 100 | 100 | 100 |
| Ice performance in wearing middle stage | 100 | 130 | 115 | 120 | 130 |
| Shoulder-drop wearing | 100 | 80 | 110 | 100 | 100 |
| Cornering stability | 100 | 85 | 100 | 100 | 100 |

According to Table 4, in Invention tires 1 through 3, it is seen that excellent ice performance can be exhibited in the wearing middle stage or later without causing shoulder-drop wearing or reduction in cornering stability.

As is understood from the above comparative experiments, according to the present invention, ice performance can be largely improved in the wearing middle stage or later as compared with the conventional tires without sacrificing shoulder-drop wearing resistance or cornering stability.

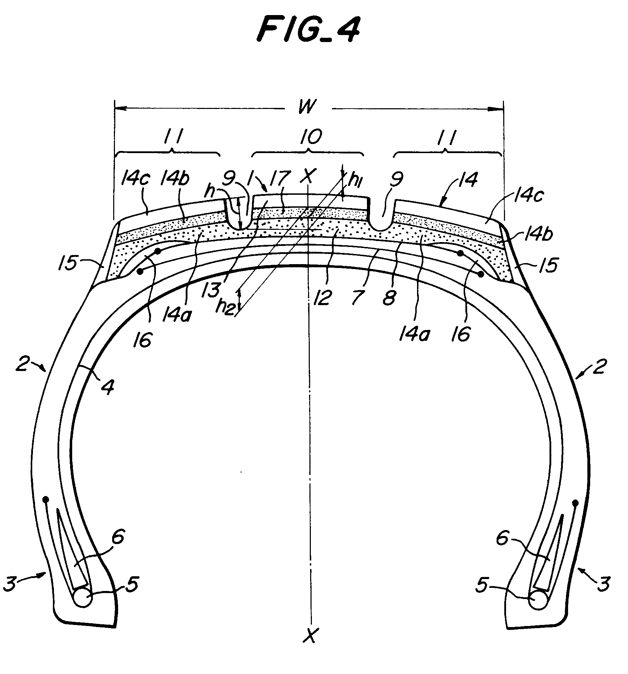

Next, a preferred embodiment of the present invention will be explained based on Fig. 4.

Since the basic construction of the tire in Fig. 4 is the same as those of Figs. 1 through 3, only different portions will be explained, while explanation of common features is basically omitted. The same reference numerals of Fig. 4 as those in Figs. 1 through 3 indicate the same or similar constituent parts as in Figs. 1 through 3.

In this embodiment, a tread in a central zone 10 located between circumferential main grooves 9 is divided into three rubber layers: an inner rubber layer 12 located on a radially innermost peripheral side, an intermediate rubber layer 17 located on a radially outer peripheral side of the inner rubber layer 12, and an outer rubber layer 13 located on a radially outer side of the intermediate rubber layer 17. The inner rubber layer 12 is made of foamed rubber having hardness and the compounding recipe shown in Table 1 above. The foamed rate of this foamed rubber is 20 %. The intermediate rubber layer 17 is made of a foamed rubber having hardness and a compounding recipe shown in Table 5 below. The foamed rate of this foamed rubber is 10 %. The outer rubber layer 13 is made of ordinary non-foamed rubber having hardness and the compounding recipe shown in Table 2 above. This ordinary non-foamed rubber has excellent ice performance and snow performance.

Table 5: Foamed rubber layer (Foamed rate: 10 %, JIS hardness: 61 degrees)

Table 5

| | part by weight |
|---|---|
| NR | 70 |
| BR | 30 |
| C/B (N110) | 75 |
| Aromatic oil | 5 |
| Stearic acid | 2 |
| Antioxidant | 1 |
| Zinc oxide | 3.5 |
| Vulcanization accelerator | 1.5 |
| Sulfur | 1.2 |
| Foaming agent | 4.0 |

In this embodiment, the thickness $h_1$ of the inner rubber layer 12 as measured radially outwardly from the bottom of the circumferential main groove 9 having a depth h of 8 mm is 3 mm, and the sum $h_2$ of the thickness of the inner rubber layer 12 and that of the intermediate rubber layer 17 as measured radially outwardly from the bottom of the circumferential main groove is 6 mm.

It is preferable that the foamed rate is 5 to 50 % for the foamed rubber constituting the inner rubber layer 12, 3 to 40 % for the rubber of the intermediate rubber layer 17, and 0 to 10 % for the rubber of the outer rubber layer 13. The voids in the foamed rubber are preferably substantially of closed cells.

In this embodiment, the side rubber layers 15 constituting the tread in the side zones 11 may be made of an ordinary non-foamed rubber having good wear resistance and used for summer tires.

In this tire, when respective amounts of oil compounded into the inner rubber layer 12 and the intermediate rubber layer 17 are made less than those of oil compounded into the surrounding tread-constituting members, reduction in flexibility of the tread due to deterioration of the rubbers of these ruber layers in the wearing middle stage or later can be prevented.

For example, in this embodiment, the amount of oil compounded into each of the inner rubber layer 12 and the intermediate rubber layer 17 is 5 parts by weight, which is far less than the amount of oil compounded into the outer rubber layer being 30 parts by weight. By so doing, influences due to change in the rubber layers with lapse of time in the wearing middle stage or later can be minimized by the oil transferred into the rubber layers 12 and 17 from the surrounding rubber, so that flexibility of the rubbers can be sufficiently maintained.

The dynamic modulus of elasticity and the JIS hardness of each of the inner rubber layer 12 and the intermediate rubber layer 17 is preferably made smaller than that of the outer rubber layer 13 from the standpoint of preventing reduction in ice performance in the wearing middle stage or later. Particularly, it is preferable that the JIS hardness is 45 to 70 degrees for the inner rubber layer 12, 55 to 70 degrees for the intermediate rubber layer 17, and 55 to 70 degrees for the outer rubber layer 13.

In the embodiment of Fig. 4, the side rubber layer 14 in the side zone of the tread is constituted by an inner layer 14a, an intermediate layer 14b and an outer layer 14c having the same foamed rates and compounding compositions as the rubber layers 12, 17 and 13, respectively. In such a case, since fracture strength of the inner layer 14a made of the foamed rubber and joined to side end portions of belt layers 7 and 8 is slightly lower than that of the non-foamed rubber, this is undesirable from the standpoint of preventing peeling of the belt ends. In this embodiment, a non-foamed, low heat generation, protective rubber 16 is interposed between the side end portions of the belt layers 7 and 8 and the inner layer 14a.

In addition, the outer surface of each of the side rubber layers 14 as viewed in the width direction of the tread is covered with an additional auxiliary rubber layer 15 having a substantially triangular shape. The additional auxiliary rubber layer 15 is made of the same rubber composition as that constituting the sidewall 2, that is substantially the same rubber composition as that of the sidewall rubber, so that bonding forces between the side portion of the side rubber layer 14 and the sidewall 2 are enhanced to prevent occurrence of cracks in a joining interface between the sidewall rubber and the side rubber layer 14.

From the standpoint of improving the productivity and the joining strength to the side rubber layer 14, it is preferable that the additional auxiliary rubber layer 15 is integrally molded together with the tread portions in the central zone and the side zones as the other constituent members for the tread 1 by simultaneous extrusion.

According to the above constructed tire, ice and snow performance during a period from the wearing initial stage to the wearing middle stage can be sufficiently effectively exhibited by the function of the outer rubber layer 13 and the outer layer 14c, whereas ice performance in the wearing middle stage or later can be fully effectively exhibited by the function of the intermediate rubber layer 17, the inner rubber layer 12, the intermediate layer 14b and the inner layer 14a.

Further, occurrence of shoulder-drop wearing and reduction in cornering stability can be effectively prevented by appropriately selecting the compounding recipe, etc. of the outer layer 14c of the side rubber layer 14.

Experiment 2:

Next, comparison tests were conducted regarding ice performance in the wearing initial stage, ice performance in the wearing middle stage, shoulder-drop wearing and cornering stability with respect to an Invention Tire, a Prior art tire and a Comparison tire, as explained below.

Test tires:

All the test tires had a tire size of 175/65R14.

(1) Invention tire      A tire having a construction as shown in Fig. 4
(2) Prior art tire       A tire in which the entire tread was constituted by an all season type rubber composition as shown in Table 2. With respect to additional auxiliary rubber layers, the same as in the Invention tire were used.
(3) Comparative tire    A tire in which the entire tread was made of foamed rubber as shown in Table 1. With respect to additional auxiliary rubber layers, the same as in the Invention tire were used.

Testing methods and test results:

The testing methods were the same as those in Experiment 1, and test results were evaluated in the same manner as in Experiment 1. Results are shown in Table 6 below by index based on those of the Prior art tire as control. The greater the index values, the better are the results. In the evaluation, the results of the Prior art tire were taken as 100, respectively.

12

Table 6

| | Prior tire | Comparison tire | Invention tire |
|---|---|---|---|
| Ice performance in wearing initial stage | 100 | 120 | 100 |
| Ice performance in wearing middle stage | 100 | 130 | 115 |
| Shoulder drop wearing | 100 | 80 | 100 |
| Cornering stability | 100 | 85 | 100 |

As is clearly seen from Table 6, in the Invention tire, excellent ice performance can be exhibited in the wearing middle stage or later without causing shoulder-drop wearing or reduction in cornering stability.

As is understood from the above comparative tests, according to the preferred embodiment of the present invention, ice performance can be also more greatly improved in the wearing middle stage or later as compared with the conventional tires without sacrificing shoulder-drop wearing resistance or cornering stability.

## Claims

1. A pneumatic tire comprising a tread (1), a pair of sidewalls (2), a pair of bead portions (3), a carcass (4) composed of cords extending at an angle of substantially 90° with respect to the circumferential direction of the tread, and at least two belt layers (7,8) arranged on the radially outer peripheral side of the crown portion of the carcass (4), the belt layers (7,8) being composed of cords inclined with respect to the circumferential direction of the tread, and the cords of one of said at least two belt layers extending in an opposite direction to that of an adjacent belt layer, wherein a pair of two circumferential main grooves (9) continuously extend in the circumferential direction of the tread on opposite sides of the equatorial plane (X-X) of the tire, a portion of the tread located between the pair of circumferential main grooves (9) in an axially central zone (10) being constituted by an inner rubber layer (12) located on a radially inner side and an outer rubber layer (13) located on a radially outer side, the inner rubber layer (12) being made of a foamed rubber having rubber characteristics different from those of the outer rubber layer (13), characterized in that the radially outer peripheral surface of the inner rubber layer being so located that the thickness ($t_1$) of the inner rubber layer (12) as measured radially outwardly from the bottom of the circumferential main groove (9) is not more than 70 % of the depth of the circumferential main groove but not less than 2 mm, in that the dynamic modulus of elasticity of the inner rubber (12) is less than that of the outer rubber layer (13), and in that the outer rubber layer (13) is made of a rubber composition having a dynamic modulus of elasticity at -20°C being in a range of $15 \times 10^7$ to $40 \times 10^7$ dyn/cm$^2$.

2. A pneumatic tire as claimed in Claim 1, characterized in that the radially outer surface of the inner rubber layer (12) is located near a position spaced radially outwardly from the bottoms of the circumferential main grooves (9) by 1/2 of the depth of the circumferential grooves.

3. A pneumatic tire as claimed in Claim 1, characterized in that the tread portion (1) in the central zone (10) is constituted by at least three layers consisting of an inner rubber layer (12) located on the radially innermost side, an intermediate rubber layer (17) located on the radially outer peripheral side of the inner rubber layer (12), and an outer rubber layer (13) located on the radially outermost peripheral side, rubber characteristics of any one of the said three rubber layers (12, 17, 13) being made different from those of the others, the thickness ($h_1$) of the inner rubber layer (12) as measured radially outwardly from the bottoms of the circumferential main grooves (9) being not more than 70 % of the depth of the circumferential main grooves but not less than 2 mm, and the sum ($h_2$) of the thickness ($h_1$) of the inner rubber layer (12) and the thickness of the intermediate rubber layer (17) being not more than 90 % of the depth of the circumferential main groove but not less than 4 mm, and in that the dynamic modulus of elasticity of each of the inner rubber layer (12) and the intermediate rubber layer (17) is less than that of the outer rubber layer (13).

4. A pneumatic tire as claimed in any of Claims 1 to 3, characterized in that the foamed rate of the foamed rubber constituting the inner rubber layer (12) is in a range of 5 to 50 %.

5. A pneumatic tire as claimed in Claim 4, when dependent upon Claim 3, characterized in that the foamed rate is in a range of 0 to 10 % for the outer rubber layer (13), a range of 3 to 40 % for the intermediate rubber layer (17), and a range of 5 to 50 % for the inner rubber layer (12), and in that said foamed rates increase in the order of the outer layer, the intermediate layer and the inner layer.

6. A pneumatic tire as claimed in any of Claims 1 to 5, characterized in that voids in the foamed rubber are substantially of closed cells.

7. A pneumatic tire as claimed in any of Claims 1 to 6, characterized in that tread portions located on axially outer sides of the respective circumferential main grooves (9) are constituted by side rubber layers (14), and the side rubber layers are made of the same rubber composition as that of the outer rubber layer (13).

8. A pneumatic tire as claimed in Claim 7, characterized in that JIS hardnesses of the inner rubber layer (12), the outer rubber layer (13) and the side rubber layer (14) are increased in the order of the inner rubber layer < the outer rubber layer ≤ the side rubber layer.

9. A pneumatic tire as claimed in Claim 7, when dependent upon Claim 3, characterized in that JIS hardnesses of the rubber layers in the central zone (10) are increased in the order of the inner rubber layer ≤ the intermediate rubber layer ≤ the outer rubber layer.

10. A pneumatic tire as claimed in any of Claims 7 to 9, characterized in that both the outer rubber layer (13) and the side rubber layer (14) are made of a non-foamed rubber.

11. A pneumatic tire as claimed in any of Claims 7 to 10, characterized in that an additional auxiliary rubber layer (15) is provided to cover an outer surface of each of the side rubber layers (14) as viewed in the width direction of the tread, and rubber characteristics of the additional auxiliary rubber layer (15) are made the same as those of the rubber of the sidewalls (2).

12. A pneumatic tire as claimed in any of Claims 1 to 11, characterized in that an amount of oil compounded into the inner rubber layer (12) is less than that of oil compounded into the other rubber layers surrounding the inner rubber layer by not less than 10 parts by weight.

13. A pneumatic tire as claimed in any of Claims 1 to 11, when dependent upon Claim 3, characterized in that an amount of oil compounded into each of the inner rubber layer (12) and the intermediate rubber layer (17) is less than that of oil compounded into the other rubber layers surrounding the inner rubber layer by not less than 10 parts by weight.

14. A pneumatic tire as claimed in any of Claims 1 to 13, characterized in that the thickness of the inner rubber layer (12) as measured radially outwardly from the bottoms of the circumferential main grooves (9) is not less than 3 mm but not more than 2/3 of the depth of the main circumferential grooves.

15. A pneumatic tire as claimed in any of Claims 1 to 14, when dependent upon Claim 3, characterized in that each of the tread portions in the side zones (11) located on the axially outer sides of the respective circumferential grooves (9) is constituted by substantially the same rubber layers in the central zone (10) of the tread.

**Patentansprüche**

1. Luftreifen, mit einer Laufflache (1), zwei Seitenwänden (2), zwei Wulstbereichen (3), einer Karkasse (4), die aus Cordfäden besteht, die sich unter einem Winkel Von im wesentlichen 90° bezüglich der Umfangsrichtung der Lauffläche erstrecken, und mindestens zwei Gürtel schichten (7, 8), die auf der radial äußeren Umfangsseite des Kronenbereichs der Karkasse (4) angeordnet sind, wobei die Gürtel schichten (7, 8) aus Cordfäden bestehen, die bezüglich der Umfangsrichtung der Lauffläche geneigt sind, und die Cordfäden von einer der mindestens zwei Gürtel schichten sich in einer anderen Richtung als die Cordfäden der angrenzenden Gürtelschicht erstrecken, wobei bei diesem Luftreifen zwei Umfangshauptrillen (9) sich auf entgegengesetzten Seiten der Äquatorebene (X-X) des Reifens kontinuierlich in der Umfangsrichtung der Lauffläche erstrecken, ein Bereich der Lauffläche, der zwischen den zwei Umfangshauptrillen (9) in einer axial mittleren Zone (10) gelegen ist, von einer auf einer radial inneren Seite gelegenen, inneren Gummischicht (12), und einer auf einer radial äußeren Seite gelegenen, äußeren Gummischicht (13) gebildet wird, wobei die innere Gummischicht (12) aus einem Schaumgummi besteht, der Gummieigenschaften hat, die verschieden von denjenigen der äußeren Gummischicht (13) sind, dadurch gekennzeichnet, daß die radial äußere Umfangsoberfläche der inneren Gummischicht so gelegen ist, daß die von dem Boden der Umfangshauptrille (9) radial nach außen gemessene Dicke ($t_1$) der inneren Gummischicht (12) nicht größer als

EP 0 576 130 B1

70% der Tiefe der Umfangshauptrille, aber nicht kleiner als 2 mm ist, daß der dynamische Elastizitätsmodul der inneren Gummischicht (12) kleiner als derjenige der äußeren Gummischicht (13) ist, und daß die äußere Gummischicht (13) aus einer Gummizusammensetzung besteht, die einen dynamischen Elastizitätsmodul bei -20°C hat, der in dem Bereich von 15 x 10$^7$ bis 40 x 10$^7$ dyn/cm$^2$ liegt.

2. Luftreifen gemäß Anspruch 1, dadurch gekennzeichnet, daß die radial äußere Oberfläche der inneren Gummischicht (12) nahe bei einer Position gelegen ist, die von dem Boden der Umfangshauptrillen (9) radial nach außen einen Abstand hat, der gleich der halben Tiefe der Umfangsrillen ist.

3. Luftreifen gemäß Anspruch 1, dadurch gekennzeichnet, daß der Laufflächenbereich (1) in der mittleren Zone (10) von mindestens drei Schichten gebildet wird, nämlich einer inneren Gummischicht (12), die auf der radial innersten Seite gelegen ist, einer Zwischengummischicht (17), die auf der radial äußeren Umfangsseite der inneren Gummischicht (12) gelegen ist, und einer äußeren Gummischicht (13), die auf der radial äußersten Umfangsseite gelegen ist, wobei die Gummieigenschaften von jeder der drei Gummi schichten (12, 17, 13) verschieden von denjenigen der anderen Gummi schichten sind, die von dem Boden der Umfangshauptrillen (9) radial nach außen gemessene Dicke (h$_1$) der inneren Gummischicht (12) nicht größer als 70% der Tiefe der Umfangshauptrillen, aber nicht kleiner als 2 mm ist, und die Summe (h$_2$) aus der Dicke (h$_1$) der inneren Gummischicht (12) und der Dicke der Zwischengummischicht (17) nicht größer als 90% der Tiefe der Umfangshauptrille, aber nicht kleiner als 4 mm ist, und daß der dynamische Elastizitätsmodul der inneren Gummischicht (12) und der Zwischengummischicht (17) kleiner als derjenige der äußeren Gummischicht (13) ist.

4. Luftreifen gemäß irgendeinem der Ansprüche 1 bis 3, dadurch gekennzeichnet, daß der Schaumanteil des Schaumgummis, der die innere Gummischicht (12) bildet, in dem Bereich von 5 bis 50% liegt.

5. Luftreifen gemäß Anspruch 4, wenn von Anspruch 3 abhängig, dadurch gekennzeichnet, daß der Schaumanteil für die äußere Gummischicht (13) in dem Bereich von 0 bis 10%, für die Zwischengummischicht (17) in dem Bereich von 3 bis 40%, und für die innere Gummischicht (12) in dem Bereich von 5 bis 50% liegt, und daß die Schaumanteile in der Reihenfolge äußere Schicht, Zwischenschicht und innere Schicht zunehmen.

6. Luftreifen gemäß irgendeinem der Ansprüche 1 bis 5, dadurch gekennzeichnet, daß Lunker in dem Schaumgummi im wesentlichen aus geschlossenen Zellen bestehen.

7. Luftreifen gemäß irgendeinem der Ansprüche 1 bis 6, dadurch gekennzeichnet, daß die auf den axial äußeren Seiten der Umfangshauptrillen (9) gelegenen Laufflächenbereiche von Seitengummischichten (14) gebildet werden, und die Seitengummischichten aus der gleichen Gummizusammensetzung wie die äußere Gummischicht (13) bestehen.

8. Luftreifen gemäß Anspruch 7, dadurch gekennzeichnet, daß die JIS-Härte der inneren Gummischicht (12), der äußeren Gummischicht (13) und der Seitengummischicht (14) in der Reihenfolge innere Gummischicht < äußere Gummischicht ≤ Seitengummischicht zunimmt.

9. Luftreifen gemäß Anspruch 7, wenn von Anspruch 3 abhängig, dadurch gekennzeichnet, daß die JIS-Härte der Gummischichten in der mittleren Zone (10) in der Reihenfolge innere Gummischicht ≤ Zwischengummischicht ≤ äußere Gummischicht zunimmt.

10. Luftreifen gemäß irgendeinem der Ansprüche 7 bis 9, dadurch gekennzeichnet, daß sowohl die äußere Gummischicht (13), als auch die Seitengummischicht (14) aus nicht-geschäumtem Gummi besteht.

11. Luftreifen gemäß irgendeinem der Ansprüche 7 bis 10, dadurch gekennzeichnet, daß eine zusätzliche Hilfsgummischicht (15) vorgesehen ist, um die in der Breitenrichtung der Lauffläche äußere Oberfläche von jeder der Seitengummischichten (14) zu bedecken, und die Gummieigenschaften der zusätzlichen Hilfsgummischicht (15) die gleichen wie bei dem Gummi der Seitenwände (2) sind.

12. Luftreifen gemäß irgendeinem der Ansprüche 1 bis 11, dadurch gekennzeichnet, daß die der inneren Gummischicht (12) zugemischte Ölmenge um mindestens 10 Gewichtsteile kleiner ist als die den anderen Gummi schichten, die die innere Gummischicht umgeben, zugemischte Ölmenge.

13. Luftreifen gemäß irgendeinem der Ansprüche 1 bis 11, wenn von Anspruch 3 abhängig, dadurch gekennzeichnet, daß die der inneren Gummischicht (12) und der Zwischengummischicht (17) jeweils zugemischte Ölmenge um mindestens 10 Gewichtsteile kleiner ist als die den anderen Gummischichten, die die innere Gummischicht umgeben, zugemischte Ölmenge.

**14.** Luftreifen gemäß irgendeinem der Ansprüche 1 bis 13, dadurch gekennzeichnet, daß die von dem Boden der Umfangshauptrillen (9) radial nach außen gemessene Dicke der inneren Gummischicht (12) nicht kleiner als 3 mm, aber nicht größer als 2/3 der Tiefe der Umfangshauptrillen ist.

**15.** Luftreifen gemäß irgendeinem der Ansprüche 1 bis 14, wenn von Anspruch 3 abhängig, dadurch gekennzeichnet, daß jeder der Laufflächenbereiche in den auf der axial äußeren Seite der Umfangsrillen (9) gelegenen Seitenzonen (11) von in wesentlichen den gleichen Gummi schichten wie in der mittleren Zone (10) der Lauffläche gebildet wird.

## Revendications

**1.** Bandage pneumatique comprenant une bande de roulement (1), une paire de flancs (2), une paire de portions de talons (3), une carcasse (4) composée de câblés s'étendant en formant un angle essentiellement de 90° par rapport à la direction circonférentielle de la bande de roulement, et au moins deux couches de ceintures (7, 8) arrangées sur le côté périphérique externe en direction radiale de la portion de couronne de la carcasse (4), les couches de ceintures (7, 8) étant composées de câblés inclinés par rapport à la direction circonférentielle de la bande de roulement et les câblés d'une desdites couches de ceintures, au moins au nombre de deux, s'étendant dans la direction opposée à celle des câblés d'une couche de ceintures adjacente, dans lequel une paire de rainures principales circonférentielles (9) s'étendent en continu dans la direction circonférentielle de la bande de roulement de part et d'autre du plan équatorial (X-X) du pneumatique, une portion de la bande de roulement située entre la paire de rainures principales circonférentielles (9) dans une zone centrale (10) en direction axiale étant constituée par une couche de caoutchouc interne (12) disposée du côté interne en direction radiale et par une couche de caoutchouc externe (13) disposée du côté externe en direction radiale, la couche de caoutchouc interne (12) étant réalisée en caoutchouc mousse dont les caractéristiques de caoutchouc sont différentes de celles de la couche de caoutchouc externe (13), caractérisé en ce que la surface périphérique externe en direction radiale de la couche de caoutchouc interne est disposée de telle sorte que l'épaisseur ($t_1$) de la couche de caoutchouc interne (12), telle que mesurée vers l'extérieur en direction radiale à partir du fond des rainures principales circonférentielles (9), ne représente pas plus de 70% de la profondeur des rainures principales circonférentielles, tout en n'étant pas inférieure à 2 mm, en ce que le module dynamique d'élasticité du caoutchouc interne (12) est inférieur à celui de la couche de caoutchouc externe (13), et en ce que la couche de caoutchouc externe (13) est constituée d'une composition de caoutchouc dont le module dynamique d'élasticité à -20°C se situe dans le domaine de $15 \times 10^7$ à $40 \times 10^7$ dyne/cm$^2$.

**2.** Bandage pneumatique selon la revendication 1, caractérisé en ce que la surface externe en direction radiale de la couche de caoutchouc interne (12) est située à proximité d'un endroit dont la distance vers l'extérieur en direction radiale par rapport au fond des rainures principales circonférentielles (9) représente 1/2 de la profondeur des rainures circonférentielles.

**3.** Bandage pneumatique selon la revendication 1, caractérisé en ce que la portion de bande de roulement (1) dans la zone centrale (10) est constituée par au moins trois couches comprenant une couche de caoutchouc interne (12) disposée du côté le plus à l'intérieur en direction radiale, une couche de caoutchouc intermédiaire (17) disposée sur le côté périphérique externe en direction radiale de la couche de caoutchouc interne (12) et une couche de caoutchouc externe (13) disposée du côté périphérique le plus à l'extérieur en direction radiale, les caractéristiques du caoutchouc de l'une quelconque desdites trois couches de caoutchouc (12, 17, 13) étant différentes de celles des autres couches, l'épaisseur ($h_1$) de la couche de caoutchouc interne (12), telle que mesurée vers l'extérieur en direction radiale à partir du fond des rainures principales circonférentielles (9), ne représentant pas plus de 70% de la profondeur des rainures principales circonférentielles, tout en n'étant pas inférieure à 2 mm, et la somme ($h_2$) de l'épaisseur ($h_1$) de la couche de caoutchouc interne (12) et de l'épaisseur de la couche de caoutchouc intermédiaire (17) ne représentant pas plus de 90% de la profondeur des rainures principales circonférentielles, tout en n'étant pas inférieure à 4 mm, et en ce que le module dynamique d'élasticité de la couche de caoutchouc interne (12) et de la couche de caoutchouc intermédiaire (17), respectivement, est inférieur à celui de la couche de caoutchouc externe (13).

**4.** Bandage pneumatique selon l'une quelconque des revendications 1 à 3, caractérisé en ce que la teneur en mousse du caoutchouc mousse constituant la couche de caoutchouc interne (12) se situe dans le domaine de 5 à 50%.

**5.** Bandage pneumatique selon la revendication 4 lorsqu'elle dépend de la revendication 3, caractérisé en ce que la teneur en mousse se situe dans le domaine de 0 à 10% pour la couche de caoutchouc externe (13), dans le domaine de 3 à 40% pour la couche de caoutchouc intermédiaire (17) et dans le domaine de 5 à 50% pour la couche de caoutchouc interne (12), et en ce que lesdites teneurs en mousse augmentent dans l'ordre de la couche externe, de la couche intermédiaire et de la couche interne.

**6.** Bandage pneumatique selon l'une quelconque des revendications 1 à 5, caractérisé en ce que les lacunes dans le caoutchouc mousse représentent essentiellement des alvéoles fermées.

**7.** Bandage pneumatique selon l'une quelconque des revendications 1 à 6, caractérisé en ce que les portions de la bande de roulement situées sur les côtés externes en direction axiale des rainures principales circonférentielles respectives (9) sont constituées par des couches de caoutchouc latérales (14), les couches de caoutchouc latérales possédant la même composition de caoutchouc que celle de la couche de caoutchouc externe (13).

**8.** Bandage pneumatique selon la revendication 7, caractérisé en ce que les duretés JIS de la couche de caoutchouc interne (12), de la couche de caoutchouc externe (13) et de la couche de caoutchouc latérale (14) augmentent dans l'ordre de la couche de caoutchouc interne < la couche de caoutchouc externe ≤ la couche de caoutchouc latérale.

**9.** Bandage pneumatique selon la revendication 7 lorsqu'elle dépend de la revendication 3, caractérisé en ce que les duretés JIS des couches de caoutchouc dans la zone centrale (10) augmentent dans l'ordre de la couche de caoutchouc interne ≤ la couche de caoutchouc intermédiaire ≤ la couche de caoutchouc externe.

**10.** Bandage pneumatique selon l'une quelconque des revendications 7 à 9, caractérisé en ce que à la fois la couche de caoutchouc externe (13) et la couche de caoutchouc latérale (14) sont constituées d'un caoutchouc non transformé en mousse.

**11.** Bandage pneumatique selon l'une quelconque des revendications 7 à 10, caractérisé en ce qu'on prévoit une couche de caoutchouc auxiliaire supplémentaire (15) pour recouvrir la surface externe de chacune des couches de caoutchouc latérales (14) lorsqu'on regarde dans le sens de la largeur de la bande de roulement, et on rend les caractéristiques du caoutchouc de la couche de caoutchouc auxiliaire supplémentaire (15) égales à celles du caoutchouc des flancs (2).

**12.** Bandage pneumatique selon l'une quelconque des revendications 1 à 11, caractérisé en ce que la quantité d'huile introduite par mélange dans la couche de caoutchouc interne (12) est inférieure à la quantité d'huile introduite par mélange dans les autres couches de caoutchouc entourant la couche de caoutchouc interne, cette différence quantitative n'étant pas inférieure à 10 parties en poids.

**13.** Bandage pneumatique selon l'une quelconque des revendications 1 à 11, lorsqu'elle dépend de la revendication 3, caractérisé en ce que la quantité d'huile introduite par mélange dans la couche de caoutchouc interne (12) et dans la couche de caoutchouc intermédiaire (17), respectivement, est inférieure à la quantité d'huile introduite par mélange dans les autres couches de caoutchouc entourant la couche de caoutchouc interne, cette différence quantitative n'étant pas inférieure à 10 parties en poids.

**14.** Bandage pneumatique selon l'une quelconque des revendications 1 à 13, caractérisé en ce que l'épaisseur de la couche de caoutchouc interne (12), telle que mesurée vers l'extérieur en direction radiale à partir du fond des rainures principales circonférentielles (9), n'est pas inférieure à 3 mm, tout en ne représentant pas plus de 2/3 de la profondeur des rainures circonférentielles principales.

**15.** Bandage pneumatique selon l'une quelconque des revendications 1 à 14, lorsqu'elle dépend de la revendication 3, caractérisé en ce que chacune des portions de bande de roulement dans les zones latérales (11) disposées sur les côtés externes en direction axiale des rainures circonférentielles respectives (9) est constituée par essentiellement les mêmes couches de caoutchouc que celles disposées dans la zone centrale (10) de la bande de roulement.

# FIG_1

# FIG_2

# FIG_3

# FIG_4